# EUROPÄISCHE PATENTANMELDUNG

(11) **EP 0 669 779 A2**
(43) Veröffentlichungstag der Anmeldung: **30.08.1995**
(21) Anmeldenummer: 95102290.4
(22) Anmeldetag: 17.02.1995
(51) Int. Cl.: H04Q 11/04

(54) **Verfahren zur Signalübertragung in einem Telekommunikationsnetz mit Baumstruktur**

(30) Priorität: 25.02.1994 DE 4406275
(71) Anmelder: SIEMENS AKTIENGESELLSCHAFT, 80333 München (DE)
(72) Erfinder: Stein, Karl-Ulrich, Dr., D-82008 Unterhaching (DE)

(57) **Zusammenfassung**

Bei einer Signalübertragung auf Koaxialanschlußleitungen eines Telekommunikationsnetzes mit Baumstruktur werden in unterschiedlichen Frequenzbereichen (RF2 und RF3) für die Signalübertragung in der Übertragungsrichtung zu den Teilnehmern hin und in der Übertragungsrichtung von den Teilnehmern weg jeweils Frequenzbänder (DFB1...DFB4 und UFB1, UFB2) gebildet und jedes Frequenzband (z.B. DFB1...DFB4) einer Gruppe (z.B. SG1...SG4) von Teilnehmern zugeordnet. Es ist eine feste Zuordnung von Frequenzbändern zu bestimmten Gruppen und darüber hinaus eine flexible Zuordnung zu einzelnen Teilnehmern der Gruppe möglich.

## Beschreibung

Die Erfindung betrifft ein Verfahren zur Signalübertragung in einem Telekommunikationsnetz mit Baumstruktur gemäß dem Oberbegriff des Patentanspruchs 1.

Telekommunikationsnetze sind aus wenigen Netzebenen aufgebaut, von denen das Anschlußleitungsnetz und das Transportnetz die Hauptebenen bilden. Die vorhandenen übertragungstechnischen Kommunikationsnetze sind "natürlich gewachsene" Netze, die - angepaßt an die jeweiligen Dienste , das Verkehrsaufkommen usw. - geplant und realisiert worden sind. So hat überwiegend der vermittelte Fernsprechdienst die Planung und Realisierung der Telekommunikationsnetze bestimmt. Mit der Einführung der synchronen Netze und der Verfügbarkeit der entsprechenden Netzelemente, ist das Diensteangebot über den vermittelten Fernsprechdienst hinaus erweitert worden, so daß neben schmalbandigen Diensten für Sprache und Daten auch Breitband- und Datendienste für den Austausch großer Datenmengen, für die Übertragung von Bildern usw., den Teilnehmern in einem Kommunikationsnetz zur Verfügung gestellt werden können. Ein vom Fernsprechdienst bis zum interaktiven Breitbanddienst reichendes Diensteangebot erfordert unterschiedliche Übertragungsbitraten bzw. -kapazitäten zur Übertragung analoger und digitaler Signale nach bekannten Zeitmultiplexverfahren.

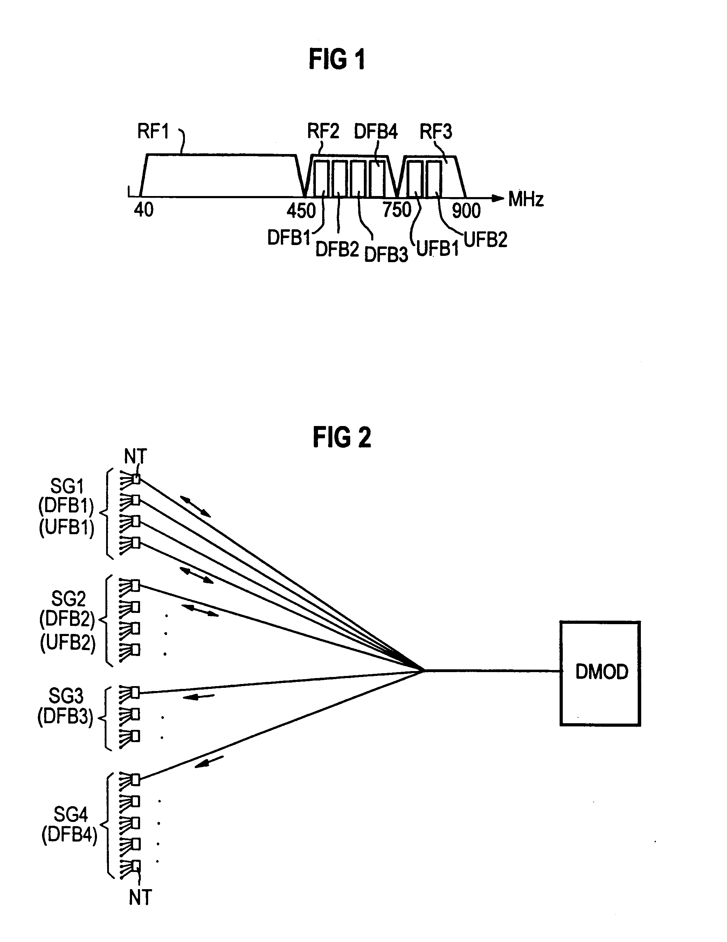

Aus dem Aufsatz "Time Warner's magic kingdom", von Richard Karpinski in Telephony, Nov. 1, 1993, Seiten 48 bis 53 ist ein Telekommunikationsnetz in Baumstruktur bekannt, dessen Koaxialanschlußleitungen als Punkt-zu-Mehrpunkt-Verbindungen zu einer Vielzahl von Teilnehmern führen (siehe Figur 1). Die Koaxialanschlußleitungen des Baumnetzes erstrecken sich zwischen einer zentralen Einrichtung - wie beispielsweise einer digitalen Vermittlungseinrichtung, einer Verteilstation oder dergleichen - und den Teilnehmern bzw. deren Endgeräten. Das Frequenzspektrum für die Signalübertragung auf den Koaxialanschlußleitungen umfaßt einen Frequenzbereich zwischen ca. 50 MHz und 450 MHz, einen unmittelbar darüberliegenden Frequenzbereich zwischen 450 MHz und 750 MHz und einen über 750 MHz liegenden Frequenzbereich. In einem der Frequenzbereiche werden analoge Signale unidirektional - d.h. in der Übertragungsrichtung zu den Teilnehmern hin - und in einem anderen Frequenzbereich digitale Signale bidirektional - d.h. zusätzlich auch in der Übertragungsrichtung von den Teilnehmern weg - getrennt voneinander übertragen (siehe Figur 2).

In einem derartigen Telekommunikationsnetz werden in zunehmendem Maße pro Teilnehmer immer höhere Bitraten in beiden Übertragungsrichtungen bereitgestellt. Bei der Vielzahl von angeschlossenen Teilnehmern führt dies zu Summen-Bitraten von einigen 100 Mbit/s, die nur schwierig und unter erheblichem Aufwand zu handhaben sind. Dies gilt einerseits für die Übertragung auf den Koaxialanschlußleitungen, die einen stark frequenzabhängigen Dämpfungs- und Phasengang haben. Zum anderen wird eine präzise Entzerrung des empfangenen Signals beim Teilnehmer umso schwieriger, je breiter das für die Übertragung erforderliche Übertragungsband ist. Darüber hinaus erschwert sich das teilnehmerseitige Demultiplexen zum Herausholen der für den jeweiligen Teilnehmer bestimmten Information aus dem hochratigen Signal.

Die Aufgabe der Erfindung besteht darin, in einem Telekommunikationsnetz mit Baumstruktur der eingangs genannten Art ein möglichst einfaches Verfahren zur Signalübertragung für hohe Bitraten in beiden Übertragungsrichtungen zu schaffen. Außerdem soll das Verfahren eine möglichst hohe Flexibilität bei der Ausnutzung der gesamten Übertragungskapazität im Netz aufweisen.

Die der Erfindung zugrunde liegende Aufgabe wird durch die im Patentanspruch 1 angegebenen Merkmale gelöst. Weiterbildungen der Erfindung sind in Unteransprüchen angegeben.

Der Frequenzbereich zur Signalübertragung in der Abwärtsrichtung zu den Teilnehmern hin und der Frequenzbereich in der Aufwärtsrichtung von den Teilnehmern weg enthalten jeweils mehrere Frequenzbänder, von denen jedes Frequenzband einer Gruppe von Teilnehmern fest zugeordnet wird. Von Vorteil ist, daß dadurch ein für die Signalübertragung festgelegtes Frequenzraster entsteht, das durch die vorgegebene Beziehung zwischen den Teilnehmern der Gruppe und einem bestimmten zugeordneten Frequenzband die bidirektionale Signalübertragung vereinfacht.

Von Vorteil ist es weiterhin, jeder Gruppe von Teilnehmern eine Gesamtübertragungsbitrate zuzuordnen, die je nach Bedarf der einzelnen Teilnehmer an individueller Übertragungsbitrate auf die Teilnehmer der Gruppe aufgeteilt wird.

Es ist auch von Vorteil, daß die Zuordnung jedes Frequenzbandes zu einer Gruppe von Teilnehmern durch eine feste Trägerfrequenz zur Signalübertragung in der einen oder anderen Übertragungsrichtung erfolgt.

Ein Ausführungsbeispiel der Erfindung wird anhand von Figuren erläutert. Es zeigen
Figur 1 ein Beispiel für eine Aufteilung des Frequenzspektrums der Koaxialanschlußleitungen in verschiedene Frequenzbereiche mit jeweils mehreren Frequenzbändern und
Figur 2 ein Beispiel für die Zuordnung der Frequenzbänder eines Frequenzbereichs zu Gruppen von Teilnehmern bei der Signalübertragung in der Abwärts- und/oder Aufwärtsrichtung.

Figur 1 zeigt das Frequenzspektrum zur Signalübertragung auf Koaxialanschlußleitungen eines Telekommunikationsnetzes - beispielsweise des Anschlußleitungsnetzes - in Baumstruktur. Die Verwendung von Koaxialanschlußleitungen als Punkt-zu-Mehrpunkt-Verbindungen ist aus der Übertragung von analogen Fernsehsignalen (CATV) in der Übertragungsrichtung zu einer Vielzahl von Teilnehmern hin - d.h. in der Abwärtsrichtung "downlink" - bekannt. Eine im Telekommunikationsnetz vorgesehene zentrale Einrichtung ist als Verteilstation (distribution module) ausgebildet, von der aus die Signale in die verschiedenen koaxialen Zweige des baumförmig ausgebildeten Netzes eingespeist werden. Für die unidirektionale Übertragung von analogen Fernsehsignalen in der Abwärtsrichtung "downlink" ist im Frequenzspektrum ein erster Frequenzbereich RF1 reserviert, der beispielsweise von etwa 40 MHz bis etwa 450 MHz reicht.

An den ersten Frequenzbereich RF1 schließen ein unmittelbar darüberliegender zweiter Frequenzbereich RF2 und ein an den zweiten Frequenzbereich RF2 angrenzender dritter Frequenzbereich RF3 an, in denen digitale Signale getrennt voneinander in der Übertragungsrichtung zu den Teilnehmern hin - in der Abwärtsrichtung "downlink" - und in der Übertragungsrichtung von den Teilnehmern weg - in der Aufwärtsrichtung "uplink" - übertragen werden. Die digitalen Signale werden in beiden Übertragungsrichtungen vorzugsweise in Nachrichtenpaketen (Zellen) konstanter Länge gemäß dem ATM-Verfahren (Asynchronous Transfer Modus) übertragen, wobei die Signalübertragung in der Aufwärtsrichtung "uplink" gemäß einem geeigneten Zeitmultiplexverfahren für Punkt-zu-Mehrpunkt-Verbindungen - beispielsweise dem TDMA-Verfahren (Time Division Multiple Access) - und die Signalübertragung in der Abwärtsrichtung "downlink" ebenfalls gemäß einem geeigneten Zeitmultiplexverfahren für Punkt- zu -Mehrpunkt-Verbindungen - beispielsweise dem TDM-Verfahren (Time Division Multiplex) - erfolgt. Einzelheiten der beiden Zeitmultiplexverfahren sind im Aufsatz "Optical Broadband Access Using ATM On A Passive Optical Network", von H.Keller u.a., International Journal of Digital and Analog Communication Systems, 1993, Vol. 6, Seiten 143 bis 149 für ein passives optisches Netz mit Lichtwellenleitern beschrieben. Die Grundsätze dieser Verfahren lassen sich ohne weiteres auf Koaxialanschlußleitungen in einem Baumnetz übertragen.

So erfolgt in der Abwärtsrichtung "downlink" die digitale Signalübertragung mit einer geeigneten Modulation - beispielsweise einer QAM-64-Modulation (Quadratic Amplitude Modulation) - in Verbindung mit dem TDM-Multiplexverfahren und dem ATM-Übertragungsverfahren, bei dem zu jedem Teilnehmer des Telekommunikationsnetzes ein virtueller Pfad (VP, virtual path) fest eingerichtet wird. Die Signale werden dabei bekanntlich in Nachrichtenpaketen (Zellen) konstanter Länge übertragen.

In der Aufwärtsrichtung "uplink" erfolgt die digitale Informationsübertragung ebenfalls mit einer geeigneten Modulation - beispielsweise der 4-PSK (Phase Shift Keying) - in Verbindung mit dem TDMA-Multiplexverfahren und dem ATM-Übertragungsverfahren. Demnach werden die Nachrichtenpakete von den Teilnehmern nur zu bestimmten Zeitpunkten burstartig abgesendet. Dabei werden die Zeitpunkte der Absendung für die einzelnen Teilnehmer von einer netzseitigen zentralen Netzabschlußeinrichtung - beispielsweise der zentralen Verteilstation des Telekommunikationsnetzes - derart gesteuert, daß die von den Teilnehmern ankommenden Nachrichtenpakete im Empfänger geordnet eintreffen, so daß sie sich nicht unzulässigerweise gegenseitig beeinflussen.

Zur bidirektionalen Übertragung der digitalen Signale bei hohen Bitraten anhand geeigneter Zeitmultiplex- und Übertragungsverfahren (TDM, TDMA, ATM) werden in den Frequenzbereichen RF2 und RF3 jeweils mehrere Frequenzbänder zugehöriger Bandbreite gebildet und Gruppen von Teilnehmern zugeordnet. Im vorliegenden Beispiel weist der für die Abwärtsrichtung "downlink" vorgesehene Frequenzbereich RF2 insgesamt vier Frequenzbänder DFB1, DFB2, DFB3 und DFB4 mit jeweils einer identischen Bandbreite von beispielsweise 37 MHz auf, während im Frequenzbereich RF3 insgesamt zwei Frequenzbänder UFB1 und UFB2 derselben Bandbreite für die Aufwärtsrichtung "uplink" vorgesehen sind.

Für das vorliegende Beispiel mit insgesamt vier Frequenzbändern DFB1...DFB4 weist die zentrale Einrichtung eine entsprechende Anzahl von insgesamt vier Modulatoren mit vier verschiedenen Trägerfrequenzen zum Aussenden der Signale zu den zugeordneten Gruppen von Teilnehmern auf. Die Trägerfrequenzen werden dabei für die einzelnen Frequenzbänder im vor-hinein festgelegt. Nach der Signalübertragung in der Aufwärtsrichtung "uplink" mit den im Frequenzbereich RF3 vorhandenen Frequenzbändern UFB1 und UFB2 brauchen die digitalen Signale in der Verteilstation für die weitere Übertragung nur noch demoduliert zu werden.

Jedes im jeweiligen Frequenzbereich vorgesehene Frequenzband wird einer Gruppe von Teilnehmern im Telekommunikationsnetz fest zugeordnet, was in Figur 2 für die Signalübertragung in beiden Übertragungsrichtungen prinzipiell dargestellt ist. Eine feste Zuordnung der Frequenzbänder des in Figur 1 dargestellten Frequenzbereichs RF2 erfolgt derart, daß das Frequenzband DFB1 einer ersten Teilnehmer-Gruppe SG1, das Frequenzband DFB2 einer zweiten Teilnehmer-Gruppe SG2, das Frequenzband DFB3 einer dritten Teilnehmer-Gruppe SG3 und das Frequenzband DFB4 einer vierten Teilnehmer-Gruppe SG4 zugeteilt ist. Dies bedeutet, daß die Teilnehmer der Gruppe SG1 digitale Signale im Frequenzband DFB1 empfangen, die mit einer zugehörigen ersten Trägerfrequenz moduliert wurden, daß die Teilnehmer der Gruppe SG2 digitale Signale im Frequenzband DFB2 empfangen, die mit einer zugehörigen zweiten, von der ersten Trägerfrequenz verschiedenen Trägerfrequenz moduliert wurden, usw.. Durch die feste Zuordnung der Frequenzbänder zu den Teilnehmer-Gruppen ist eine Adressierung der einzelnen Gruppen nicht erforderlich.

Die in der Figur 2 dargestellten Verbindungen zwischen einer zentralen Einrichtung DMOD - beispielsweise in Form einer zentralen Verteilstation (distribution module) - und den Gruppen SG1...SG4 sind unidirektionale und bidirektionale Verbindungen, deren Übertragungsrichtung(en) durch Richtungspfeile gekennzeichnet ist(sind). So verwenden die Teilnehmer der Gruppe SG1 bzw. der Gruppe SG2 die zugeordneten Frequenzbänder DFB1 und UFB1 bzw. DFB2 und UFB2 für die bidirektionale Signalübertragung in der Aufwärtsrichtung und in der Abwärtsrichtung, hingegen sind die Frequenzbänder DFB3 und DFB4 den Teilnehmern der Gruppen SG3 und SG4 nur für die unidirektionale Signalübertragung in der Abwärtsrichtung vorbehalten.

Die Zuordnung der Frequenzbänder UFB1 und UFB2 des für die "uplink"-Übertragung vorgesehenen Frequenzbereichs zu den Gruppen SG1 und SG2 ist nicht notwendigerweise durch die Zuordnung der Frequenzbänder DFB1 und DFB2 des für die "downlink"-Übertragung vorgesehenen Frequenzbereichs zu denselben Gruppen SG1 und SG2 festgelegt. Prinzipiell können die Gruppen von Teilnehmern in beiden Frequenzbereichen und damit in beiden Übertragungsrichtungen auch unabhängig voneinander den Frequenzbändern zugeordnet sein.

In der Regel ist die Zuordnung in beiden Übertragungsrichtungen ohnehin unsymmetrisch wie beispielsweise bei einem Informationsabrufsystem (Video on demand), das in der Abwärtsrichtung eine wesentlich höhere Übertragungskapazität als in der Aufwärtsrichtung benötigt. Teilnehmerseitige Netzabschlußeinrichtungen NT (network termination) zum Anschluß der Teilnehmer der Gruppen SG1...SG4 erhalten eine Steuerinformation, anhand der sie erkennen können, in welchem Frequenzband die für den einzelnen Teilnehmer bestimmten Signale enthalten sind bzw in welchem Frequenzband sie die Signale aussenden sollen. Die Teilnehmer der Gruppen SG1...SG4 sind durch die Netzabschlußeinrichtungen NT mit den Koaxialanschlußleitungen des Baumnetzes verbunden.

Fur jede der Gruppen SG1...SG4 wird eine Gesamtübertragungsbitrate zur Signalübertragung in der Abwärtsrichtung "downlink" zu den Teilnehmern der jeweiligen Gruppe festgelegt und je nach Bedarf der einzelnen Teilnehmer an individueller Übertragungsbitrate zur Nutzung unterschiedlicher Dienste, die vom Fernsprechdienst über Informationsabrufsysteme bis hin zu Breitbanddiensten reichen, innerhalb der Gruppe auf die Teilnehmer aufgeteilt.

Die Bildung der Frequenzbänder in den verschiedenen Frequenzbereichen und deren feste Zuordnung zu den Gruppen von Teilnehmern kann darüber hinaus flexibel gestaltet werden, indem bei Erreichen der Gesamtübertragungskapazität einer Gruppe - beispielsweise wegen hoher Bitraten für einzelne Teilnehmer dieser Gruppe - auf eine andere Gruppe ausgewichen wird, die noch Übertragungskapazität frei hat. Einem einzelnen Teilnehmer kann über einen festen Übertragungskanal in einem fest vereinbarten und einer bestimmten Gruppe zugeordneten Frequenzband jeweils mitgeteilt werden, in welchem Frequenzband die für ihn bestimmten Signale übertragen werden bzw in welchem Frequenzband die Signale vom Teilnehmer auszusenden sind. Zu dem gesonderten Übertragungskanal hat jeder Teilnehmer ständig Zugriff. Die Mitteilung erfolgt anhand von Steuerbefehlen eines zentral angeordneten Netzmanagement-Prozessors an die einzelnen Teilnehmer.

Die flexible Zuordnung eines Frequenzbandes zu einzelnen Teilnehmern einer Gruppe kann nach jeder neu aufgebauten Verbindung in Abhängigkeit der zur Verfügung stehenden Übertragungskapazität geändert werden. Die teilnehmerseitigen Netzabschlußeinrichtungen NT und die netzseitige Netzabschlußeinrichtung weisen hierzu steuerbare Modulatoren und Demodulatoren auf. Dadurch läßt sich die Gesamtübertragungskapazität im Telekommunikationsnetz flexibler und damit besser ausnutzen.

## Patentansprüche

1. Verfahren zur Signalübertragung in einem Telekommunikationsnetz mit Baumstruktur, bei dem die Signale auf Koaxialanschlußleitungen, die als Punkt-zu-Mehrpunkt-Verbindungen zwischen einer zentralen Einrichtung und mehreren Teilnehmern verlaufen, in unterschiedlichen Frequenzbereichen (RF2 und RF3) für die Übertragungsrichtung zu den Teilnehmern hin und für die Übertragungsrichtung von den Teilnehmern weg übertragen werden, dadurch gekennzeichnet,
daß in jedem Frequenzbereich (RF2 und RF3) Teil-Frequenzbänder (DFB1...DFB4 und UFB1, UFB2) gebildet werden und daß jedes Frequenzband (z.B. DFB1...DFB4) einer Gruppe (z.B. SG1...SG4) von Teilnehmern zugeordnet wird.

2. Verfahren nach Anspruch 1,
dadurch gekennzeichnet,
daß zur Signalübertragung in dem jeweiligen, einer Gruppe (z.B. SG1) fest zugeordneten Frequenzband (z.B. DFB1) eine feste Trägerfrequenz verwendet wird.

3. Verfahren nach Anspruch 2,
dadurch gekennzeichnet,
daß jeder Gruppe (z.B. SG1...) von Teilnehmern eine Gesamtübertragungsbitrate zur Signalübertragung zugeordnet wird.

4. Verfahren nach Anspruch 3,
dadurch gekennzeichnet,
daß die Gesamtübertragungsbitrate je nach Bedarf der einzelnen Teilnehmer an individueller Übertragungsbitrate auf die Teilnehmer der jeweiligen Gruppe (z.B. SG1...) aufgeteilt wird.

5. Verfahren nach einem der vorhergehenden Ansprüche,
dadurch gekennzeichnet,
daß die Signale in der Übertragungsrichtung von den Teilnehmern weg gemäß dem TDMA-Zeitmultiplexverfahren und in der Übertragungsrichtung zu den Teilnehmern hin gemäß dem TDM-Zeitmultiplexverfahrenübertragen werden.

6. Verfahren nach einem der vorhergehenden Ansprüche,
dadurch gekennzeichnet,
daß die Signale in beiden Übertragungsrichtungen gemäß dem ATM-Verfahren in Nachrichtenpaketen konstanter Länge übertragen werden.

7. Verfahren nach einem der vorhergehenden Ansprüche,
dadurch gekennzeichnet,
daß einzelne Teilnehmer der einem Frequenzband fest zugeordneten Gruppe (z.B. SG1) bei Erreichen der für die Gruppe zur Verfügung stehenden Gesamtübertragungskapazität einem anderen Frequenzband (DFB2...DFB4) im jeweiligen Frequenzbereich (z.B. RF2) zugeteilt werden.

8. Verfahren nach Anspruch 7,
dadurch gekennzeichnet,
daß in einem fest vereinbarten und einer bestimmten Gruppe zugeordneten Frequenzband ein fester Übertragungskanal zur Information über die einzelnen Teilnehmern zugeteilten Frequenzbänder eingerichtet wird, auf den von allen Teilnehmern zugegriffen werden kann.

9. Verfahren nach Anspruch 7 oder 8,
dadurch gekennzeichnet,
daß zur Zuteilung einzelner Teilnehmer zu Frequenzbändern von einer zentralen Steuereinheit an die Teilnehmer Steuerbefehle gesendet werden, die von teilnehmerseitigen Netzabschlußeinrichtungen ausgewertet werden.
